# EUROPEAN PATENT APPLICATION

(11) **EP 4 510 736 A1**
(43) Date of publication of application: **19.02.2025**
(21) Application number: 23787768.3
(22) Date of filing: 12.04.2023
(51) Int. Cl.: H04W 72/04

(54) **SIDELINK DISCOVERY TRANSMISSION PROCESSING METHOD AND APPARATUS, AND TERMINAL**

(30) Priority: 15.04.2022 CN 202210400221
(71) Applicant: Vivo Mobile Communication Co., Ltd., Dongguan, Guangdong 523863 (CN)
(72) Inventor: ZHENG, Qian, Dongguan, Guangdong 523863 (CN); BAO, Wei, Dongguan, Guangdong 523863 (CN)
(74) Representative: Lavoix
(86) International application number: PCT/CN2023/087896
(87) International publication number: WO 2023/198125

(57) **Abstract**

This application provides a sidelink discovery transmission processing method and apparatus, and a terminal, and belongs to the field of communication technologies. The sidelink discovery transmission processing method in embodiments of this application includes: determining, by a terminal, whether to perform a first operation, where the first operation includes at least one of the following: performing CBR measurement for a sidelink discovery transmission; or performing full sensing resource selection for a sidelink discovery transmission.

## Description

### CROSS-REFERENCE TO RELATED APPLICATIONS

This application claims priority to Chinese Patent Application No. 202210400221.2 filed on April 15, 2022, which is incorporated herein by reference in its entirety.

### TECHNICAL FIELD

This application relates to the field of communication technologies, and specifically, to a sidelink discovery transmission processing method and apparatus, and a terminal.

### BACKGROUND

Currently, in a channel busy ratio (Channel Busy Ratio, CBR) measurement mechanism in a new ratio (New Radio, NR) sidelink communication scenario, as long as a transmission resource pool is configured in a system information block (System Information Block, SIB) or a sidelink (sidelink, SL) preconfiguration message, a terminal needs to perform CBR measurement, resulting in high power consumption of the terminal. In addition, an NR sidelink communication scenario in current technologies supports only a full sensing (full sensing) resource selection mechanism. This also affects power consumption of a terminal.

### SUMMARY

Embodiments of this application provide a sidelink discovery transmission processing method and apparatus, and a terminal, which can resolve a problem of high power consumption of a terminal in current technologies.

According to first aspect, a sidelink discovery transmission processing method is provided, including:
determining, by a terminal, whether to perform a first operation, where the first operation includes at least one of the following:
performing CBR measurement for a sidelink discovery transmission; or
performing full sensing resource selection for a sidelink discovery transmission.

According to a second aspect, a sidelink discovery transmission processing apparatus is provided, including:
a determining module, configured to determine whether to perform a first operation, where the first operation includes at least one of the following:
performing CBR measurement for a sidelink discovery transmission; or
performing full sensing resource selection for a sidelink discovery transmission.

According to a third aspect, a terminal is provided. The terminal includes a processor and a memory. The memory stores a program or instructions executable on the processor. The program or the instructions, when executed by the processor, implement the steps of the sidelink discovery transmission processing method according to the first aspect.

According to a fourth aspect, a terminal is provided, including a processor and a communication interface. The processor is configured to determine whether to perform a first operation, where the first operation including at least one of the following:
performing CBR measurement for a sidelink discovery transmission; or
performing full sensing resource selection for a sidelink discovery transmission.

According to a fifth aspect, a communication system is provided, including a terminal and a network side device. The terminal may be configured to perform the steps of the sidelink discovery transmission processing method according to the first aspect.

According to a sixth aspect, a readable storage medium is provided, where the readable storage medium stores a program or instructions, and the program or the instructions, when executed by a processor, implement the steps of the sidelink discovery transmission processing method according to the first aspect.

According to a seventh aspect, a chip is provided, where the chip includes a processor and a communication interface, the communication interface is coupled to the processor, and the processor is configured to run a program or instructions, to implement the sidelink discovery transmission processing method according to the first aspect.

According to an eighth aspect, a computer program/program product is provided, where the computer program/program product is stored in a storage medium, and the computer program/program product is executed by at least one processor to implement the sidelink discovery transmission processing method according to the first aspect.

In embodiments of this application, the terminal can determine whether to perform CBR measurement for the sidelink discovery transmission and/or whether to perform full sensing resource selection for the sidelink discovery transmission. For example, the terminal may not perform CBR measurement for the sidelink discovery transmission, and/or the terminal may not perform full sensing resource selection for the sidelink discovery transmission. In this way, the terminal can determine whether to perform CBR measurement and/or full sensing resource selection as required in a sidelink discovery transmission scenario. In other words, CBR measurement and/or full sensing resource selection performed by the terminal is considered as an optional operation. In this way, energy saving of the terminal is implemented and power consumption of the terminal is reduced, and the terminal has more flexibility in performing CBR measurement and/or full sensing resource selection in the sidelink discovery transmission scenario.

### BRIEF DESCRIPTION OF THE DRAWINGS

FIG. 1 is a block diagram of a wireless communication system to which an embodiment of this application can be applied;
FIG. 2 is a flowchart of a sidelink discovery transmission processing method according to an embodiment of this application;
FIG. 3 is a structural diagram of a sidelink discovery transmission processing apparatus according to an embodiment of this application;
FIG. 4 is a structural diagram of a communication device according to an embodiment of this application; and
FIG. 5 is a structural diagram of a terminal according to an embodiment of this application.

### DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish between similar objects, but are not used to describe a specific sequence or order. It should be understood that the terms used in this way are interchangeable in a proper case, so that embodiments of this application can be implemented in other orders than the orders illustrated or described herein. Moreover, the objects distinguished by "first" and "second" are usually of one type, and the quantity of objects is not limited. For example, there may be one or more first objects. In addition, "and/or" in the description and claims represents at least one of connected objects, and the character "/" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6th generation (6th Generation, 6G) communication system.

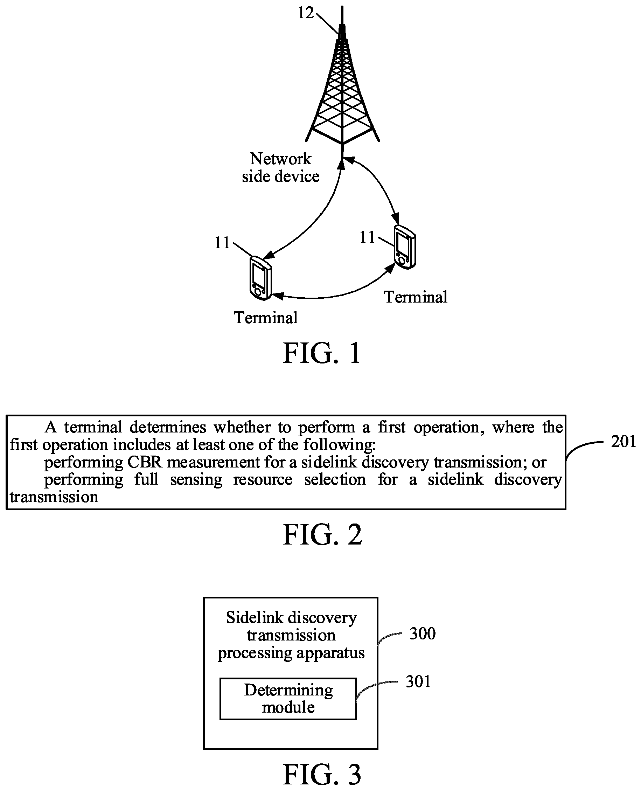

FIG. 1 is a block diagram of a wireless communication system to which an embodiment of this application can be applied. The communication system includes terminals 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home equipment with wireless communication functions, such as a refrigerator, a TV, a washing machine, or furniture), a game console, a personal computer (Personal Computer, PC), a teller machine, or a self-service machine. The wearable device includes: a smart watch, a smart band, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in embodiments of this application, a specific type of the terminal 11 is not limited. The network side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a Home NodeB, a Home evolved NodeB, a transmitting receiving point (Transmitting Receiving Point, TRP), or another suitable term in the field. As long as the same technical effect is achieved, the base station is not limited to a specific technical vocabulary. It should be noted that, only a base station in an NR system is used as an example in embodiments of this application, and the specific type of the base station is not limited.

The sidelink discovery transmission processing method provided in embodiments of this application is described in detail below with reference to the accompanying drawings by using some embodiments and application scenarios.

Refer to FIG. 2. FIG. 2 is a flowchart of a sidelink discovery transmission processing method according to an embodiment of this application. As shown in FIG. 2, the method includes the following steps:
Step 201: A terminal determines whether to perform a first operation, where the first operation includes at least one of the following:
performing CBR measurement for a sidelink discovery transmission; or
performing full sensing resource selection for a sidelink discovery transmission.

Optionally, the terminal may independently determine whether to perform the first operation, or the terminal may determine, based on indication information such as a preset rule, a network configuration indication, or a preconfiguration indication, whether to perform the first operation. For example, the terminal determines, based on the preset rule, whether to perform CBR measurement for the sidelink discovery (sidelink discovery) transmission, or determines, based on the preset rule, whether to perform full sensing (full sensing) resource detection for the sidelink discovery transmission, or determines, based on the preset rule, whether to perform CBR measurement and full sensing resource detection for the sidelink discovery transmission. Certainly, the terminal may alternatively determine, based on indication information, whether to perform the first operation. Details are not described in this embodiment.

In some embodiments, the performing CBR measurement for a sidelink discovery transmission may be performing CBR measurement by the terminal on an NR sidelink discovery transmission on one or more transmission resource pools indicated by specific information.

In some implementations, the specific information may be sl-TxPoolSelectedNormal, sl-DiscTxPoolSelected, sl-TxPoolExceptional, or the like.

In some embodiments, that the terminal determines whether to perform CBR measurement for the sidelink discovery transmission includes at least one of the following:
When the terminal is configured for transmit discovery (transmit discovery), the terminal determines, based on which pool (namely, a resource pool) is selected for transmit discovery, that CBR measurement can be performed in a dedicated discovery pool or shared pool (dedicated discovery pool or shared pool).

When the terminal is configured for transmit discovery (transmit discovery), in addition to the dedicated discovery pool or shared pool (dedicated discovery pool or shared pool), the terminal may alternatively perform CBR measurement in another pool. The another pool described herein may be a pool indicated by at least one of x-PoolMeasToAddModList or sl-TxPoolExceptional.

It should be noted that, in a channel busy ratio (Channel Busy Ratio, CBR) measurement mechanism in a new ratio (New Radio, NR) sidelink communication scenario, as long as transmission resource pools are configured in a system information block (System Information Block, SIB) or a sidelink (sidelink, SL) preconfiguration message, the terminal needs to perform CBR measurement. However, the terminal does not necessarily use these transmission resource pools for data transmission. In this embodiment, the determining, by the terminal, whether to perform CBR measurement for the sidelink discovery transmission is introduced, so that the terminal can determine whether to perform CBR measurement and/or full sensing resource selection as required. In other words, CBR measurement performed by the terminal is considered as an optional operation. For example, the terminal may not perform CBR measurement for the sidelink discovery transmission. In this way, energy saving of the terminal is implemented and power consumption of the terminal is reduced, and the terminal has more flexibility in performing CBR measurement in a sidelink discovery transmission scenario.

It should be noted that an NR sidelink communication scenario in current technologies supports a full sensing (full sensing) resource selection mechanism, and a new power saving resource selection mechanism may be further introduced. After the new power saving resource selection mechanism is introduced, a condition on when the terminal uses the power saving resource selection mechanism for data transmission is not clear. This also affects power consumption of the terminal. Therefore, in this embodiment of this application, the terminal may determine whether to perform full sensing resource selection for the sidelink discovery transmission as required. To be specific, full sensing resource selection for the sidelink discovery transmission is considered as an optional operation. In this way, energy saving of the terminal is implemented and power consumption of the terminal is reduced, and the terminal has more flexibility in performing full sensing resource selection for the sidelink discovery transmission.

It should be noted that the sidelink discovery transmission in embodiments of this application specifically refers to a transmission of a discovery message of a sidelink discovery procedure. An NR sidelink discovery procedure supports two modes: Model A (Model A) and Model B (Model B), where Model A includes a discovery announcement (discovery announcement) message, and Model B includes a discovery solicitation (discovery solicitation) message and a discovery response (discovery response) message.

Based on the above, in embodiments of this application, the terminal can determine whether to perform CBR measurement for the sidelink discovery transmission and/or whether to perform full sensing resource selection for the sidelink discovery transmission. For example, the terminal may not perform CBR measurement for the sidelink discovery transmission, and/or the terminal may not perform full sensing resource selection for the sidelink discovery transmission. In this way, CBR measurement and/or full sensing resource selection performed by the terminal in the sidelink discovery transmission scenario can be relaxed, energy saving of the terminal is implemented, and the terminal has more flexibility in performing CBR measurement and/or full sensing resource selection in the sidelink discovery transmission scenario.

In an implementation of embodiments of this application, that the terminal determines whether to perform the first operation includes:
determining, by the terminal based on at least one of a first preset rule or a first indication, whether to perform CBR measurement for the sidelink discovery transmission, where
the first indication includes at least one of the following:
   a network configuration indication; or
   a preconfiguration indication.

It should be noted that the first preset rule may be a preset rule agreed on in a protocol. For example, it is agreed on in the protocol that the terminal performs CBR measurement or does not perform CBR measurement for the sidelink discovery transmission. Alternatively, the terminal may perform CBR measurement or not perform CBR measurement for the sidelink discovery transmission based on the network configuration indication and/or the preconfiguration indication.

In some embodiments, the network configuration indication may include an RRC reconfiguration (RRCReconfiguration).

Optionally, the network configuration indication is sent via at least one of the following:
a radio resource control (Radio Resource Control, RRC) reconfiguration message; or
a system information block (System Information Block, SIB) message.

Optionally, in a case that the terminal meets a first condition, the terminal determines a value or a value range of a sidelink discovery transmission parameter based on a default CBR value, where
the first condition includes at least one of the following:
the terminal is configured by an upper layer of the terminal to transmit a sidelink discovery message;
the terminal determines, based on at least one of the first preset rule or the first indication, not to perform CBR measurement for the sidelink discovery transmission; or
a resource pool selected by the terminal is a normal communication resource pool or an exceptional resource pool.

For example, if the terminal is configured by the upper layer of the terminal to transmit an NR sidelink discovery (Sidelink discovery) message, the terminal determines, based on the first preset rule and/or the first indication, not to perform CBR measurement for an NR Sidelink discovery transmission, and a resource pool selected by the terminal for the NR Sidelink discovery transmission is a normal communication resource pool (a sidelink transmission selection normal resource pool (sl-TxPoolSelectedNormal), a sidelink transmission power saving selection normal resource pool (sl-TxPoolSelectedNormalPS), or a sidelink transmission scheduling resource pool (sl-TxPoolScheduling)) or an exceptional resource pool (sl-TxPoolExceptional, or referred to as a sidelink transmission exceptional resource pool), it is specified that the terminal uses the default (default) CBR value to determine a value or a value range of an NR Sidelink discovery transmission parameter. sl-TxPoolSelectedNormal and sl-TxPoolSelectedNormalPS are resource pools used by UE in an autonomous mode (Mode 2), and sl-TxPoolScheduling is a resource pool used by the UE in a base station scheduling mode (Mode 1). A main difference between sl-TxPoolSelectedNormal and sl-TxPoolSelectedNormalPS is that the latter is a normal communication resource pool dedicated to a power saving (power saving, PS) resource mechanism.

It may be understood that the first condition may alternatively be other possible cases included above, which are not listed in this embodiment. In this embodiment of this application, in a case that the first condition is met, the terminal can determine the value or the value range of the sidelink discovery transmission parameter by using the default CBR value. In this way, even if the terminal does not perform CBR measurement for the sidelink discovery transmission, the terminal can determine the value or the value range of the sidelink discovery transmission parameter, to ensure implementation of the sidelink discovery transmission by the terminal.

It should be noted that the upper layer (upper layers) of the terminal is a general term for an upper entity above a radio resource control (Radio Resource Control, RRC) layer in the terminal, and may specifically include at least one of a non-access stratum layer (Non-Access Stratum layer, NAS layer), a vehicle to everything layer (Vehicle to Everything layer, V2X layer), a proximity service layer (Proximity Service layer, ProSe layer), or an application layer (Application layer).

In this embodiment of this application, the normal communication resource pool may be any one of the following:
a resource pool dedicated to a sidelink communication (Sidelink communication) transmission; or
a resource pool shared by a sidelink communication (Sidelink communication) transmission and a sidelink discovery (Sidelink discovery) transmission.

The exceptional resource pool may be a resource pool used when an exceptional situation (for example, a Uu interface radio link failure (Radio Link Failure, Uu RLF), or when resource sensing sensing is being performed but no resources are available) occurs during the Sidelink communication transmission and/or the Sidelink discovery transmission.

In some embodiments, the resource pool set may include a resource pool indicated by at least one of information such as sl-TxPoolSelectedNormal, sl-TxPoolSelectedNormalPS, sl-TxPoolScheduling, sl-DiscTxPoolSelected, sl-DiscTxPoolScheduling, or sl-TxPoolExceptional.

Optionally, in a case that the terminal determines, based on at least one of the first preset rule or the first indication, not to perform CBR measurement for the sidelink discovery transmission, the terminal does not perform CBR measurement on a first target resource pool, where
the first target resource pool is any resource pool in a resource pool set; and
the resource pool set includes at least one of a normal communication resource pool, an exceptional resource pool, or a discovery dedicated resource pool.

It should be noted that the discovery dedicated resource pool may be a resource pool dedicated to the sidelink discovery transmission (sl-DiscTxPoolSelected).

In this embodiment of this application, in a case that the terminal determines not to perform CBR measurement for the sidelink discovery transmission, the terminal may not perform CBR measurement for at least one resource pool in the resource pool set, for example, may not perform CBR measurement for all resource pools in the resource pool set. In this way, CBR measurement performed by the terminal in the sidelink discovery transmission scenario can be relaxed, and power consumption of the terminal is reduced
Optionally, the method further includes:
in a case that the terminal determines, based on at least one of the first preset rule or the first indication, to perform CBR measurement for the sidelink discovery transmission, performing, by the terminal, CBR measurement on a second target resource pool, where
the second target resource pool is part of resource pools in a resource pool set; and
the resource pool set includes at least one of a normal communication resource pool, an exceptional resource pool, or a discovery dedicated resource pool.

For example, the resource pool set includes the normal communication resource pool, the exceptional resource pool, and the discovery dedicated resource pool. If the terminal determines, based on the first preset rule (for example, specified in a protocol) and/or the first indication, to perform CBR measurement for the sidelink discovery transmission, the terminal may perform CBR measurement on part of resource pools in the resource pool set, for example, may perform CBR measurement on only the normal communication resource pool, or perform CBR measurement on the discovery dedicated resource pool, or perform CBR measurement on the normal communication resource pool and the exceptional resource pool. In this way, the terminal has a greater degree of freedom in performing CBR measurement, the terminal has more flexibility in performing CBR measurement in the sidelink discovery transmission scenario, and power consumption of the terminal is reduced.

It should be noted that the terminal performs CBR measurement on the second target resource pool under a condition that the terminal has a CBR measurement capability and that the terminal is configured by the upper layer to transmit the sidelink discovery message.

In an implementation of embodiments of this application, that the terminal performs CBR measurement on a second target resource pool includes:
in a case that the terminal meets a second condition, determining, by the terminal, the resource pool set based on a resource pool configuration of a first SIB, and performing CBR measurement on the second target resource pool in the determined resource pool set, where
the second condition includes any one of the following:
   the terminal is in RRC inactive state or RRC idle state, and the first SIB sent by a network side device and received by the terminal carries the resource pool configuration of a frequency used for the sidelink discovery transmission; or
   the terminal is in RRC connected state, an RRC reconfiguration message sent by a network side device and received by the terminal does not carry the resource pool configuration of a frequency used for the sidelink discovery transmission, and the first SIB sent by the network side device and received by the terminal carries the resource pool configuration of the frequency used for the sidelink discovery transmission.

For example, if the terminal is in the RRC inactive (RRC_INACTIVE) state or the RRC idle (RRC_IDLE) state, and the first SIB (for example, a SIB 12) sent by the network side device and received by the terminal carries the resource pool configuration of the frequency used for the sidelink discovery transmission, the terminal determines the resource pool set based on the resource pool configuration carried in the first SIB, and performs CBR measurement on part of resource pools (namely, the second target resource pool) in the determined resource pool set.

Optionally, if the resource pool configuration carried in the first SIB does not include the discovery dedicated resource pool, for example, the resource pool configuration is the normal communication resource pool and the exceptional resource pool, the terminal performs CBR measurement on the normal communication resource pool and the exceptional resource pool.

If the resource pool configuration carried in the first SIB includes the discovery dedicated resource pool, for example, the resource pool configuration includes the discovery dedicated resource pool, the normal communication resource pool, and the exceptional resource pool, the terminal may perform CBR measurement on the discovery dedicated resource pool and the exceptional resource pool.

Optionally, in another implementation of embodiments of this application, that the terminal performs CBR measurement on a second target resource pool includes:
in a case that the terminal is in RRC connected state, and an RRC reconfiguration message sent by a network side device and received by the terminal carries the resource pool configuration of a frequency used for the sidelink discovery transmission, determining, by the terminal, the resource pool set based on an RRC reconfiguration message configuration, and performing CBR measurement on the second target resource pool in the determined resource pool set.

In this implementation, if the terminal is in the RRC connected (RRC_CONNECTED) state, and the RRC reconfiguration message sent by the network side device and received by the terminal carries the resource pool configuration of the frequency used for the sidelink discovery transmission, the terminal determines the resource pool set based on the resource pool configuration carried in the RRC reconfiguration message, and performs CBR measurement on part of resource pools in the resource pool set.

Optionally, if the resource pool configuration carried in the RRC reconfiguration message does not include the discovery dedicated resource pool, for example, the resource pool configuration is the normal communication resource pool and the exceptional resource pool, the terminal may perform CBR measurement on the normal communication resource pool.

If the resource pool configuration carried in the RRC reconfiguration message includes the discovery dedicated resource pool, for example, the resource pool configuration includes the discovery dedicated resource pool, the normal communication resource pool, and the exceptional resource pool, the terminal may perform CBR measurement on the discovery dedicated resource pool.

Optionally, in another implementation of embodiments of this application, that the terminal performs CBR measurement on a second target resource pool includes:
in a case that the terminal is out-of-coverage at a frequency used for the sidelink discovery transmission, determining, by the terminal, the resource pool set based on a sidelink preconfiguration, and performing CBR measurement on the second target resource pool in the determined resource pool set.

In this implementation, if the terminal is out-of-coverage (out-of-coverage, OOC) at the frequency used for the sidelink discovery transmission, the terminal determines the resource pool set based on the sidelink preconfiguration, and performs CBR measurement on at least part of resource pools in the resource pool set.

Optionally, if a resource pool indicated by the sidelink preconfiguration does not include the discovery dedicated resource pool, for example, the resource pool indicated by the sidelink preconfiguration includes the normal communication resource pool and the exceptional resource pool, the terminal may perform CBR measurement on the normal communication resource pool and the exceptional resource pool.

If the resource pool indicated by the sidelink preconfiguration includes the discovery dedicated resource pool, for example, the resource pool indicated by the sidelink preconfiguration includes the discovery dedicated resource pool, the normal communication resource pool, and the exceptional resource pool, the terminal may perform CBR measurement on the discovery dedicated resource pool and the exceptional resource pool.

In this embodiment of this application, the terminal can determine the configured resource pool set based on the foregoing different message configurations or the resource pool configuration status carried in the configuration message, to perform CBR measurement on at least part of the resource pools in the determined resource pool set. In this way, the terminal has a greater degree of freedom in performing CBR measurement, the terminal has more flexibility in performing CBR measurement, and energy saving of the terminal is implemented.

Optionally, in a case that the resource pool set does not include the discovery dedicated resource pool, the second target resource pool includes the normal communication resource pool; or
in a case that the resource pool set includes the discovery dedicated resource pool, the second target resource pool includes the discovery dedicated resource pool.

To be specific, in a case that the resource pool set indicated by the message (for example, the first SIB or the RRC reconfiguration message) configuration or the sidelink preconfiguration does not include the discovery dedicated resource pool, the terminal performs CBR measurement on at least the normal communication resource pool. For example, if the resource pool configuration carried in the RRC reconfiguration message does not include the discovery dedicated resource pool, the terminal may perform CBR measurement on the normal communication resource pool. Alternatively, in a case that the resource pool set indicated by the message configuration or the sidelink preconfiguration includes the discovery dedicated resource pool, the terminal performs CBR measurement on at least the discovery dedicated resource pool. In this way, the terminal can perform CBR measurement on only part of the resource pools, implementing a manner of performing CBR measurement by the terminal in the sidelink discovery transmission scenario, and implementing energy saving of the terminal.

Optionally, the second target resource pool may further include the exceptional resource pool. For example, if the resource pool indicated by the sidelink preconfiguration does not include the discovery dedicated resource pool, the terminal may perform CBR measurement on the normal communication resource pool and the exceptional resource pool. For another example, if the resource pool configuration carried in the first SIB includes the discovery dedicated resource pool, the terminal may perform CBR measurement on the discovery dedicated resource pool and the exceptional resource pool, and so on. For details, refer to the aforementioned CBR measurement cases in the different message configuration scenarios. Details are not described herein again. In this way, the terminal has more flexiblility in selecting a resource pool on which CBR measurement is performed.

In some embodiments, in a case that the terminal is in the RRC-connected (RRC-CONNECTED) state, if the RRC reconfiguration message (for example, VarMeasConfig) carries the resource pool configuration (for example, tx-PoolMeasToAddModList) of the frequency used for the sidelink discovery transmission, the terminal may perform CBR measurement on each transmission resource pool indicated by tx-PoolMeasToAddModList.

In some embodiments, in a case that the terminal is in the RRC connected (RRC-CONNECTED) state, if sl-ConfigDedicated information corresponding to the frequency in the RRC reconfiguration message (for example, RRCReconfiguration) carries the resource pool configuration (for example, sl-DiscTxPoolSelected, sl-TxPoolSelectedNormal, sl-TxPoolScheduling, or sl-TxPoolExceptional) of the frequency used for the sidelink discovery transmission, the terminal may perform CBR measurement on a resource pool indicated by sl-DiscTxPoolSelected, sl-TxPoolSelectedNormal, sl-TxPoolScheduling, or sl-TxPoolExceptional. Further, that the terminal may perform CBR measurement on the resource pool indicated by sl-DiscTxPoolSelected, sl-TxPoolSelectedNormal, sl-TxPoolScheduling, or sl-TxPoolExceptional may be understood as that the terminal performs CBR measurement on the corresponding resource pool only under the condition that sl-DiscTxPoolSelected, sl-TxPoolSelectedNormal, sl-TxPoolScheduling, or sl-TxPoolExceptional is included (included) in sl-ConfigDedicatedNR information.

In some embodiments, if the terminal is configured with NR sidelink discovery (NR sidelink discovery), and configuration information (for example, SidelinkPreconfigNR) corresponding to a related frequency includes at least one of sl-TxPoolSelectedNormal or sl-TxPoolExceptional, but does not include sl-DiscTxPoolSelected, the terminal may perform CBR measurement on a resource pool corresponding to at least one of sl-TxPoolSelectedNormal or sl-TxPoolExceptional included in SidelinkPreconfiguNR corresponding to the related frequency.

In some embodiments, if the terminal is configured with NR sidelink discovery, and the configuration information (for example, SidelinkPreconfigNR) corresponding to the related frequency includes sl-DiscTxPoolSelected, the terminal performs CBR measurement on the resource pool corresponding to at least one of sl-TxPoolSelectedNormal or sl-TxPoolExceptional when SidelinkPreconfigNR includes at least one of sl-TxPoolSelectedNormal or sl-TxPoolExceptional.

In this embodiment of this application, that the terminal determines whether to perform the first operation includes:
determining, by the terminal based on at least one of a second preset rule or a second indication, whether to perform full sensing resource selection for the sidelink discovery transmission, where
the second indication includes at least one of the following:
   a network configuration indication;
   a preconfiguration indication; or
   a terminal upper layer indication.

Optionally, the second preset rule may be a preset rule agreed on in a protocol. For example, it is agreed on in the protocol that the terminal performs full sensing resource selection or does not perform sensing resource selection for the sidelink discovery transmission. Alternatively, the terminal may determine, based on the network configuration indication, the preconfiguration indication, and/or the terminal upper layer indication, to perform full sensing resource selection or does not perform sensing resource selection for the sidelink discovery transmission.

It should be noted that the network configuration indication and the preconfiguration indication may explicitly or implicitly indicate whether to perform full sensing (enable/disable full sensing) resource selection.

Optionally, in a case that the second indication includes at least one of the network configuration indication or the preconfiguration indication, the terminal determines, based on at least one of the second preset rule or the second indication, whether to perform full sensing resource selection for the sidelink discovery transmission, including any one of the following:
in a case that at least one of a network configuration or a preconfiguration carries a discovery dedicated resource pool configuration, and the discovery dedicated resource pool configuration does not carry a parameter configuration related to a power saving resource selection mechanism, the terminal determines to perform full sensing resource selection for the sidelink discovery transmission; or
in a case that at least one of a network configuration or a preconfiguration carries a discovery dedicated resource pool configuration, and the discovery dedicated resource pool configuration carries a parameter configuration related to a power saving resource selection mechanism, the terminal determines not to perform full sensing resource selection for the sidelink discovery transmission.

In this embodiment of this application, in the discovery dedicated resource pool configuration in the network configuration and in the preconfiguration, based on whether the discovery dedicated resource pool carries the parameter configuration related to the power saving resource selection mechanism, whether the terminal performs full sensing resource selection for the sidelink discovery transmission is implicitly indicated. The power saving resource selection mechanism includes partial sensing (partial sensing) resource selection and random (random) resource selection. The parameter configuration related to the power saving resource selection mechanism may be any combination of three resource selection mechanisms (full sensing, partial sensing, and random selection) that the terminal is allowed to use.

Optionally, the terminal determines, based on at least one of the second preset rule or the second indication, whether to perform full sensing resource selection for the sidelink discovery transmission, including any one of the following:
in a case that the terminal upper layer indication includes a power saving requirement, the terminal determines, based on the terminal upper layer indication, not to perform full sensing resource selection for the sidelink discovery transmission; or
in a case that the terminal upper layer indication is default or does not include a power saving requirement, the terminal determines, based on the terminal upper layer indication, to perform full sensing resource selection for the sidelink discovery transmission.

In this embodiment of this application, the terminal may further determine, based on whether the terminal upper layer indication includes the power saving requirement, whether to perform full sensing resource selection for the sidelink discovery transmission. In this way, the indication of whether the terminal performs full sensing resource selection for the sidelink discovery transmission is more flexible.

Optionally, the method further includes:
in a case that the terminal determines, based on at least one of the second preset rule or the second indication, to perform full sensing resource selection for the sidelink discovery transmission, selecting, by the terminal, a third target resource pool for full sensing resource selection, where
the third target resource pool is at least part of resource pools in a resource pool set; and
the resource pool set includes at least one of a normal communication resource pool, an exceptional resource pool, or a discovery dedicated resource pool.

For example, the resource pool set includes the normal communication resource pool, the exceptional resource pool, and the discovery dedicated resource pool. If the terminal determines, based on the second preset rule (for example, a protocol agreement) and/or the second indication, to perform full sensing resource selection for the sidelink discovery transmission, the terminal may perform full sensing resource selection on part of resource pools in the resource pool set, for example, may perform full sensing resource selection on only the normal communication resource pool, or perform full sensing resource selection on the discovery dedicated resource pool, or perform full sensing resource selection on the normal communication resource pool and the exceptional resource pool. In this way, the terminal has a greater degree of freedom in performing full sensing resource selection, the terminal has more flexibility in performing full sensing resource selection in the sidelink discovery transmission scenario, and power consumption of the terminal is reduced.

Optionally, in a case that the resource pool set does not include the discovery dedicated resource pool, the third target resource pool includes a resource pool that supports only full sensing resource selection and/or a resource pool that supports at least full sensing resource selection in the normal communication resource pool; or
in a case that the resource pool set includes the discovery dedicated resource pool, the third target resource pool includes the discovery dedicated resource pool.

It should be noted that the discovery dedicated resource pool may be a resource pool that supports only full sensing resource selection by default. The normal communication resource pool may be three types of resource pools that support full sensing, support at least full sensing, and do not support full sensing, and that are determined based on power saving parameter configurations related to the resource pools.

In this embodiment of this application, if the resource pool set does not include the discovery dedicated resource pool, the terminal performs full sensing resource selection on a resource pool that supports only full sensing resource selection in the normal communication resource pool, or performs full sensing resource selection on a resource pool that supports at least full sensing resource selection in the normal communication resource pool. If the resource pool set includes the discovery dedicated resource pool, the terminal performs full sensing resource selection on the discovery dedicated resource pool. In this way, the terminal can determine, based on whether the resource pool set includes the discovery dedicated resource pool, the resource pool for full sensing resource selection in the sidelink discovery transmission scenario. This provides a greater degree of freedom and flexibility for the terminal to perform full sensing resource selection in the sidelink discovery transmission scenario.

The sidelink discovery transmission processing method according to embodiments of this application may be performed by a sidelink discovery transmission processing apparatus. In this embodiment of this application, the sidelink discovery transmission processing apparatus provided in embodiments of this application is described by using an example in which the sidelink discovery transmission processing method is performed by the sidelink discovery transmission processing apparatus.

Refer to FIG. 3. FIG. 3 is a structural diagram of a sidelink discovery transmission processing apparatus according to an embodiment of this application. As shown in FIG. 3, the sidelink discovery transmission processing apparatus 300 includes:
a determining module 301, configured to determine whether to perform a first operation, where the first operation includes at least one of the following:
performing CBR measurement for a sidelink discovery transmission; or
performing full sensing resource selection for a sidelink discovery transmission.

Optionally, the determining module 301 is further configured to:
determine, based on at least one of a first preset rule or a first indication, whether to perform CBR measurement for the sidelink discovery transmission, where
the first indication includes at least one of the following:
   a network configuration indication; or
   a preconfiguration indication.

Optionally, in a case that the apparatus meets a first condition, the apparatus determines a value or a value range of a sidelink discovery transmission parameter based on a default CBR value, where
the first condition includes at least one of the following:
the apparatus is configured by an upper layer to transmit a sidelink discovery message;
the apparatus determines, based on at least one of the first preset rule or the first indication, not to perform CBR measurement for the sidelink discovery transmission; or
a resource pool selected by the apparatus is a normal communication resource pool or an exceptional resource pool.

Optionally, in a case that the apparatus determines, based on at least one of the first preset rule or the first indication, not to perform CBR measurement for the sidelink discovery transmission, the apparatus does not perform CBR measurement on a first target resource pool, where
the first target resource pool is any resource pool in a resource pool set; and
the resource pool set includes at least one of a normal communication resource pool, an exceptional resource pool, or a discovery dedicated resource pool.

Optionally, the apparatus further includes:
an execution module, configured to perform CBR measurement on a second target resource pool in a case of determining, based on at least one of the first preset rule or the first indication, to perform CBR measurement for the sidelink discovery transmission, where
the second target resource pool is part of resource pools in a resource pool set; and
the resource pool set includes at least one of a normal communication resource pool, an exceptional resource pool, or a discovery dedicated resource pool.

Optionally, in a case that the apparatus meets a second condition, the execution module is further configured to:
determine the resource pool set based on a resource pool configuration of a first system information block SIB, and perform CBR measurement on the second target resource pool in the determined resource pool set, where
the second condition includes any one of the following:
   the apparatus is in radio resource control RRC inactive state or RRC idle state, and the first SIB sent by a network side device and received by the apparatus carries the resource pool configuration of a frequency used for the sidelink discovery transmission; or
   the apparatus is in RRC connected state, an RRC reconfiguration message sent by a network side device and received by the apparatus does not carry the resource pool configuration of a frequency used for the sidelink discovery transmission, and the first SIB sent by the network side device and received by the apparatus carries the resource pool configuration of the frequency used for the sidelink discovery transmission.

Optionally, in a case that the apparatus is in RRC connected state, and an RRC reconfiguration message sent by a network side device and received by the apparatus carries the resource pool configuration of a frequency used for the sidelink discovery transmission, the execution module is further configured to:
determine the resource pool set based on an RRC reconfiguration message configuration, and perform CBR measurement on the second target resource pool in the determined resource pool set.

Optionally, in a case that the apparatus is out-of-coverage at a frequency used for the sidelink discovery transmission, the execution module is further configured to:
determine the resource pool set based on a sidelink preconfiguration, and perform CBR measurement on the second target resource pool in the determined resource pool set.

Optionally, in a case that the resource pool set does not include the discovery dedicated resource pool, the second target resource pool includes the normal communication resource pool; or
in a case that the resource pool set includes the discovery dedicated resource pool, the second target resource pool includes the discovery dedicated resource pool.

Optionally, the second target resource pool further includes the exceptional resource pool.

Optionally, the network configuration indication is sent via at least one of the following:
an RRC reconfiguration message; or
a SIB message.

Optionally, the determining module 301 is further configured to:
determine, based on at least one of a second preset rule or a second indication, whether to perform full sensing resource selection for the sidelink discovery transmission, where
the second indication includes at least one of the following:
   a network configuration indication;
   a preconfiguration indication; or
   a terminal upper layer indication.

Optionally, in a case that the second indication includes at least one of the network configuration indication or the preconfiguration indication, the determining module 301 is further configured to perform any one of the following:
in a case that at least one of a network configuration or a preconfiguration carries a discovery dedicated resource pool configuration, and the discovery dedicated resource pool configuration does not carry a parameter configuration related to a power saving resource selection mechanism, determine to perform full sensing resource selection for the sidelink discovery transmission; or
in a case that at least one of a network configuration or a preconfiguration carries a discovery dedicated resource pool configuration, and the discovery dedicated resource pool configuration carries a parameter configuration related to a power saving resource selection mechanism, determine not to perform full sensing resource selection for the sidelink discovery transmission.

Optionally, the determining module 301 is further configured to perform any one of the following:
in a case that the terminal upper layer indication includes a power saving requirement, determine, based on the terminal upper layer indication, not to perform full sensing resource selection for the sidelink discovery transmission; or
in a case that the terminal upper layer indication is default or does not include a power saving requirement, determine, based on the terminal upper layer indication, to perform full sensing resource selection for the sidelink discovery transmission.

Optionally, the apparatus further includes:
a selecting module, configured to: in a case that the apparatus determines, based on at least one of the second preset rule or the second indication, to perform full sensing resource selection for the sidelink discovery transmission, select a third target resource pool for full sensing resource selection, where
the third target resource pool is at least part of resource pools in a resource pool set; and
the resource pool set includes at least one of a normal communication resource pool, an exceptional resource pool, or a discovery dedicated resource pool.

Optionally, in a case that the resource pool set does not include the discovery dedicated resource pool, the third target resource pool includes a resource pool that supports only full sensing resource selection and/or a resource pool that supports at least full sensing resource selection in the normal communication resource pool; or
in a case that the resource pool set includes the discovery dedicated resource pool, the third target resource pool includes the discovery dedicated resource pool.

In embodiments of this application, the apparatus can determine whether to perform CBR measurement for the sidelink discovery transmission and/or whether to perform full sensing resource selection for the sidelink discovery transmission, for example, may not perform CBR measurement for the sidelink discovery transmission, and/or may not perform full sensing resource selection for the sidelink discovery transmission. In this way, CBR measurement and/or full sensing resource selection performed by the apparatus in the sidelink discovery transmission scenario can be relaxed, energy saving of the apparatus is implemented, power consumption of the apparatus is reduced, and the apparatus has more flexibility in performing CBR measurement and/or full sensing resource selection in the sidelink discovery transmission scenario.

The sidelink discovery transmission processing apparatus 300 in this embodiment of this application may be an electronic device, such as an electronic device with an operating system, or a component in an electronic device, such as an integrated circuit or a chip. The electronic device may be a terminal or another device other than a terminal. For example, the terminal may include, but is not limited to, the types of the terminal 11 listed above, and the another device may be a server, a network attached storage (Network Attached Storage, NAS), or the like. This is not specifically limited in this embodiment of this application.

The sidelink discovery transmission processing apparatus 300 according to this embodiment of this application can implement the processes implemented by the terminal in the method embodiments in FIG. 2, and can achieve the same technical effects. To avoid repetition, details are not described herein again.

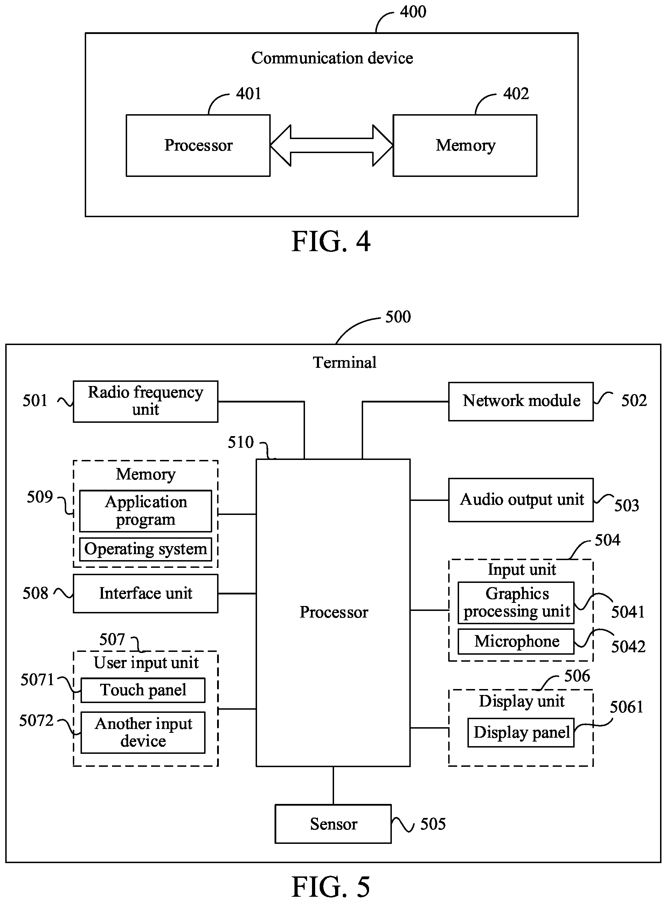

Optionally, as shown in FIG. 4, an embodiment of this application further provides a communication device 400, including a processor 401 and a memory 402. The memory 402 stores a program or instructions executable on the processor 401. For example, when the communication device 400 is a terminal, the program or the instructions, when executed by the processor 401, implement the steps of the method embodiments in FIG. 2, and can achieve the same technical effects. To avoid repetition, details are not described herein again.

An embodiment of this application further provides a terminal, including a processor and a communication interface. The processor is configured to determine whether to perform a first operation. The first operation includes at least one of the following: performing CBR measurement for a sidelink discovery transmission or performing full sensing resource selection for a sidelink discovery transmission. The terminal embodiment corresponds to the foregoing terminal-side method embodiment. Each implementation process and implementation of the foregoing method embodiment can be applied to the terminal embodiment, and can achieve the same technical effects. Specifically, FIG. 5 is a schematic structural diagram of hardware of a terminal according to an embodiment of this application.

The terminal 500 includes, but is not limited to, at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include the power supply (for example, a battery) for supplying power to the components. The power supply may be logically connected to the processor 510 by using a power management system, thereby implementing functions such as charging, discharging, and power consumption management by using the power management system. A terminal structure shown in FIG. 5 does not constitute a limitation to the terminal, and the terminal may include more or fewer components than those shown in the figure, or some components may be combined, or a different component deployment may be used. Details are not described herein again.

It should be understood that in embodiments of this application, the input unit 504 may include a graphics processing unit (Graphics Processing Unit, GPU) 5041 and a microphone 5042, and the graphics processing unit 5041 processes image data of still images or videos obtained by an image capture apparatus (for example, a camera) in a video capture mode or an image capture mode. The display unit 506 may include a display panel 5061, and the display panel 5061 may be configured in a form such as a liquid crystal display or an organic light emitting diode. The user input unit 507 includes at least one of a touch panel 5071 and another input device 5072. The touch panel 5071 is also referred to as a touchscreen. The touch panel 5071 may include two parts: a touch detection apparatus and a touch controller. The another input device 5072 may include, but is not limited to, a physical keyboard, a functional key (for example, a volume control key or a switch key), a track ball, a mouse, and a joystick, which are not repeated herein.

In this embodiment of this application, the radio frequency unit 501 receives downlink data from a network side device and then transmits the data to the processor 510 for processing. In addition, the radio frequency unit 501 may send uplink data to the network side device. Generally, the radio frequency unit 501 includes, but is not limited to, an antenna, an amplifier, a transceiver, a coupler, a low noise amplifier, a duplexer, and the like.

The memory 509 may be configured to store software programs or instructions, and various pieces of data. The memory 509 may mainly include a first storage area storing a program or instructions and a second storage area storing data. The first storage area may store an operating system, an application program or instruction required by at least one function (for example, a sound playing function and an image playing function), and the like. In addition, the memory 509 may include a volatile memory or a non-volatile memory, or the memory 509 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 509 in this embodiment of this application includes, but is not limited to, such memories and any other suitable types of memories.

The processor 510 may include one or more processing units. Optionally, the processor 510 integrates an application processor and a modem processor. The application processor mainly processes operations related to an operating system, a user interface, an application program, and the like. The modem processor mainly processes wireless communication signals, and may be, for example, a baseband processor. It may be understood that the modem processor may alternatively not be integrated into the processor 510.

The processor 510 is configured to determine whether to perform a first operation, where the first operation includes at least one of the following:
performing CBR measurement for a sidelink discovery transmission; or
performing full sensing resource selection for a sidelink discovery transmission.

Optionally, the processor 510 is further configured to:
determine, based on at least one of a first preset rule or a first indication, whether to perform CBR measurement for the sidelink discovery transmission, where
the first indication includes at least one of the following:
   a network configuration indication; or
   a preconfiguration indication.

Optionally, in a case that the terminal meets a first condition, the terminal determines a value or a value range of a sidelink discovery transmission parameter based on a default CBR value, where
the first condition includes at least one of the following:
the terminal is configured by an upper layer of the terminal to transmit a sidelink discovery message;
the terminal determines, based on at least one of the first preset rule or the first indication, not to perform CBR measurement for the sidelink discovery transmission; or
a resource pool selected by the terminal is a normal communication resource pool or an exceptional resource pool.

Optionally, in a case that the terminal determines, based on at least one of the first preset rule or the first indication, not to perform CBR measurement for the sidelink discovery transmission, the terminal does not perform CBR measurement on a first target resource pool, where
the first target resource pool is any resource pool in a resource pool set; and
the resource pool set includes at least one of a normal communication resource pool, an exceptional resource pool, or a discovery dedicated resource pool.

Optionally, the processor 510 is further configured to:
perform CBR measurement on a second target resource pool in a case that the terminal determines, based on at least one of the first preset rule or the first indication, to perform CBR measurement for the sidelink discovery transmission, where
the second target resource pool is part of resource pools in a resource pool set; and
the resource pool set includes at least one of a normal communication resource pool, an exceptional resource pool, or a discovery dedicated resource pool.

Optionally, in a case that the terminal meets a second condition, the processor 510 is further configured to:
determine the resource pool set based on a resource pool configuration of a first system information block SIB, and perform CBR measurement on the second target resource pool in the determined resource pool set, where
the second condition includes any one of the following:
   the terminal is in radio resource control RRC inactive state or RRC idle state, and the first SIB sent by a network side device and received by the terminal carries the resource pool configuration of a frequency used for the sidelink discovery transmission; or
   the terminal is in RRC connected state, an RRC reconfiguration message sent by a network side device and received by the terminal does not carry the resource pool configuration of a frequency used for the sidelink discovery transmission, and the first SIB sent by the network side device and received by the terminal carries the resource pool configuration of the frequency used for the sidelink discovery transmission.

Optionally, in a case that the terminal is in RRC connected state, and an RRC reconfiguration message sent by a network side device and received by the terminal carries the resource pool configuration of a frequency used for the sidelink discovery transmission, the processor 510 is further configured to:
determine the resource pool set based on an RRC reconfiguration message configuration, and perform CBR measurement on the second target resource pool in the determined resource pool set.

Optionally, in a case that the terminal is out-of-coverage at a frequency used for the sidelink discovery transmission, the processor 510 is further configured to:
determine the resource pool set based on a sidelink preconfiguration, and perform CBR measurement on the second target resource pool in the determined resource pool set.

Optionally, in a case that the resource pool set does not include the discovery dedicated resource pool, the second target resource pool includes the normal communication resource pool; or
in a case that the resource pool set includes the discovery dedicated resource pool, the second target resource pool includes the discovery dedicated resource pool.

Optionally, the second target resource pool further includes the exceptional resource pool.

Optionally, the network configuration indication is sent via at least one of the following:
an RRC reconfiguration message; or
a SIB message.

Optionally, the processor 510 is further configured to:
determine, based on at least one of a second preset rule or a second indication, whether to perform full sensing resource selection for the sidelink discovery transmission, where
the second indication includes at least one of the following:
   a network configuration indication;
   a preconfiguration indication; or
   a terminal upper layer indication.

Optionally, in a case that the second indication includes at least one of the network configuration indication or the preconfiguration indication, the processor 510 is further configured to perform any one of the following:
in a case that at least one of a network configuration or a preconfiguration carries a discovery dedicated resource pool configuration, and the discovery dedicated resource pool configuration does not carry a parameter configuration related to a power saving resource selection mechanism, determine to perform full sensing resource selection for the sidelink discovery transmission; or
in a case that at least one of a network configuration or a preconfiguration carries a discovery dedicated resource pool configuration, and the discovery dedicated resource pool configuration carries a parameter configuration related to a power saving resource selection mechanism, determine not to perform full sensing resource selection for the sidelink discovery transmission.

Optionally, the processor 510 is further configured to perform any one of the following:
in a case that the terminal upper layer indication includes a power saving requirement, determine, based on the terminal upper layer indication, not to perform full sensing resource selection for the sidelink discovery transmission; or
in a case that the terminal upper layer indication is default or does not include a power saving requirement, determine, based on the terminal upper layer indication, to perform full sensing resource selection for the sidelink discovery transmission.

Optionally, the processor 510 is further configured to:
in a case of determining, based on at least one of the second preset rule or the second indication, to perform full sensing resource selection for the sidelink discovery transmission, select a third target resource pool for full sensing resource selection, where
the third target resource pool is at least part of resource pools in a resource pool set; and
the resource pool set includes at least one of a normal communication resource pool, an exceptional resource pool, or a discovery dedicated resource pool.

Optionally, in a case that the resource pool set does not include the discovery dedicated resource pool, the third target resource pool includes a resource pool that supports only full sensing resource selection and/or a resource pool that supports at least full sensing resource selection in the normal communication resource pool; or
in a case that the resource pool set includes the discovery dedicated resource pool, the third target resource pool includes the discovery dedicated resource pool.

In embodiments of this application, the terminal can determine whether to perform CBR measurement for the sidelink discovery transmission and/or whether to perform full sensing resource selection for the sidelink discovery transmission. For example, the terminal may not perform CBR measurement for the sidelink discovery transmission, and/or the terminal may not perform full sensing resource selection for the sidelink discovery transmission. In this way, CBR measurement and/or full sensing resource selection performed by the terminal in the sidelink discovery transmission scenario can be relaxed, energy saving of the terminal is implemented, power consumption of the terminal is reduced, and the terminal has more flexibility in performing CBR measurement and/or full sensing resource selection in the sidelink discovery transmission scenario.

An embodiment of this application further provides a readable storage medium. The readable storage medium may be non-transitory/non-volatile. The readable storage medium stores a program or instructions, where the program or the instructions, when executed by a processor, implement the processes in FIG. 2 and the method embodiments, and can achieve the same technical effects. To avoid repetition, details are not described herein again.

The processor is the processor in the terminal described in the foregoing embodiment. The readable storage medium includes a computer-readable storage medium such as a computer read-only memory ROM, a random access memory RAM, a magnetic disk, or an optical disk.

An embodiment of this application further provides a chip, where the chip includes a processor and a communication interface, the communication interface is coupled to the processor, and the processor is configured to run a program or instructions, to implement the processes in FIG. 2 and the method embodiments, and can achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes in FIG. 2 and the method embodiments, and can achieve the same technical effects. To avoid repetition, details are not described herein again.

An embodiment of this application further provides a communication system, including a terminal and a network side device. The terminal may be configured to perform the steps in FIG. 2 and of the sidelink discovery transmission processing method.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A sidelink discovery transmission processing method, comprising:
determining, by a terminal, whether to perform a first operation, wherein the first operation comprises at least one of the following:
performing CBR measurement for a sidelink discovery transmission; or
performing full sensing resource selection for a sidelink discovery transmission.

2. The method according to claim 1, wherein the determining, by a terminal, whether to perform a first operation comprises:
determining, by the terminal based on at least one of a first preset rule or a first indication, whether to perform CBR measurement for the sidelink discovery transmission, wherein
the first indication comprises at least one of the following:
a network configuration indication; or
a preconfiguration indication.

3. The method according to claim 2, wherein in a case that the terminal meets a first condition, the terminal determines a value or a value range of a sidelink discovery transmission parameter based on a default CBR value, wherein
the first condition comprises at least one of the following:
the terminal is configured by an upper layer of the terminal to transmit a sidelink discovery message;
the terminal determines, based on at least one of the first preset rule or the first indication, not to perform CBR measurement for the sidelink discovery transmission; or
a resource pool selected by the terminal is a normal communication resource pool or an exceptional resource pool.

4. The method according to claim 2, wherein in a case that the terminal determines, based on at least one of the first preset rule or the first indication, not to perform CBR measurement for the sidelink discovery transmission, the terminal does not perform CBR measurement on a first target resource pool, wherein
the first target resource pool is any resource pool in a resource pool set; and
the resource pool set comprises at least one of a normal communication resource pool, an exceptional resource pool, or a discovery dedicated resource pool.

5. The method according to claim 2, wherein the method further comprises:
in a case that the terminal determines, based on at least one of the first preset rule or the first indication, to perform CBR measurement for the sidelink discovery transmission, performing, by the terminal, CBR measurement on a second target resource pool, wherein
the second target resource pool is part of resource pools in a resource pool set; and
the resource pool set comprises at least one of a normal communication resource pool, an exceptional resource pool, or a discovery dedicated resource pool.

6. The method according to claim 5, wherein the performing, by the terminal, CBR measurement on a second target resource pool comprises:
in a case that the terminal meets a second condition, determining, by the terminal, the resource pool set based on a resource pool configuration of a first system information block SIB, and performing CBR measurement on the second target resource pool in the determined resource pool set, wherein
the second condition comprises any one of the following:
the terminal is in radio resource control RRC inactive state or RRC idle state, and the first SIB sent by a network side device and received by the terminal carries the resource pool configuration of a frequency used for the sidelink discovery transmission; or
the terminal is in RRC connected state, an RRC reconfiguration message sent by a network side device and received by the terminal does not carry the resource pool configuration of a frequency used for the sidelink discovery transmission, and the first SIB sent by the network side device and received by the terminal carries the resource pool configuration of the frequency used for the sidelink discovery transmission.

7. The method according to claim 5, wherein the performing, by the terminal, CBR measurement on a second target resource pool comprises:
in a case that the terminal is in RRC connected state, and an RRC reconfiguration message sent by a network side device and received by the terminal carries the resource pool configuration of a frequency used for the sidelink discovery transmission, determining, by the terminal, the resource pool set based on an RRC reconfiguration message configuration, and performing CBR measurement on the second target resource pool in the determined resource pool set.

8. The method according to claim 5, wherein the performing, by the terminal, CBR measurement on a second target resource pool comprises:
in a case that the terminal is out-of-coverage on the frequency used for the sidelink discovery transmission, determining, by the terminal, the resource pool set based on a sidelink preconfiguration, and performing CBR measurement on the second target resource pool in the determined resource pool set.

9. The method according to any one of claims 6 to 8, wherein in a case that the resource pool set does not comprise the discovery dedicated resource pool, the second target resource pool comprises the normal communication resource pool; or
in a case that the resource pool set comprises the discovery dedicated resource pool, the second target resource pool comprises the discovery dedicated resource pool.

10. The method according to claim 9, wherein the second target resource pool further comprises the exceptional resource pool.

11. The method according to claim 2, wherein the network configuration indication is sent via at least one of the following:
an RRC reconfiguration message; or
a SIB message.

12. The method according to claim 1, wherein the determining, by a terminal, whether to perform a first operation comprises:
determining, by the terminal based on at least one of a second preset rule or a second indication, whether to perform full sensing resource selection for the sidelink discovery transmission, wherein
the second indication comprises at least one of the following:
a network configuration indication;
a preconfiguration indication; or
a terminal upper layer indication.

13. The method according to claim 12, wherein in a case that the second indication comprises at least one of the network configuration indication or the preconfiguration indication, the terminal determines, based on at least one of the second preset rule or the second indication, whether to perform full sensing resource selection for the sidelink discovery transmission, comprising any one of the following:
in a case that at least one of a network configuration or a preconfiguration carries a discovery dedicated resource pool configuration, and the discovery dedicated resource pool configuration does not carry a parameter configuration related to a power saving resource selection mechanism, the terminal determines to perform full sensing resource selection for the sidelink discovery transmission; or
in a case that at least one of a network configuration or a preconfiguration carries a discovery dedicated resource pool configuration, and the discovery dedicated resource pool configuration carries a parameter configuration related to a power saving resource selection mechanism, the terminal determines not to perform full sensing resource selection for the sidelink discovery transmission.

14. The method according to claim 12, wherein the terminal determines, based on at least one of the second preset rule or the second indication, whether to perform full sensing resource selection for the sidelink discovery transmission, comprising any one of the following:
in a case that the terminal upper layer indication comprises a power saving requirement, the terminal determines, based on the terminal upper layer indication, not to perform full sensing resource selection for the sidelink discovery transmission; or
in a case that the terminal upper layer indication is absent or does not comprise a power saving requirement, the terminal determines, based on the terminal upper layer indication, to perform full sensing resource selection for the sidelink discovery transmission.

15. The method according to claim 12, wherein the method further comprises:
in a case that the terminal determines, based on at least one of the second preset rule or the second indication, to perform full sensing resource selection for the sidelink discovery transmission, selecting, by the terminal, a third target resource pool for full sensing resource selection, wherein
the third target resource pool is at least part of resource pools in a resource pool set; and
the resource pool set comprises at least one of a normal communication resource pool, an exceptional resource pool, or a discovery dedicated resource pool.

16. The method according to claim 15, wherein in a case that the resource pool set does not comprise the discovery dedicated resource pool, the third target resource pool comprises a resource pool that supports only full sensing resource selection and/or a resource pool that supports at least full sensing resource selection in the normal communication resource pool; or
in a case that the resource pool set comprises the discovery dedicated resource pool, the third target resource pool comprises the discovery dedicated resource pool.

17. A sidelink discovery transmission processing apparatus, comprising:
a determining module, configured to determine whether to perform a first operation, wherein the first operation comprises at least one of the following:
performing CBR measurement for a sidelink discovery transmission; or
performing full sensing resource selection for a sidelink discovery transmission.

18. The apparatus according to claim 17, wherein the determining module is further configured to:
determine, based on at least one of a first preset rule or a first indication, whether to perform CBR measurement for the sidelink discovery transmission, wherein
the first indication comprises at least one of the following:
a network configuration indication; or
a preconfiguration indication.

19. The apparatus according to claim 18, wherein in a case that the apparatus meets a first condition, the apparatus determines a value or a value range of a sidelink discovery transmission parameter based on a default CBR value, wherein
the first condition comprises at least one of the following:
the apparatus is configured by an upper layer to transmit a sidelink discovery message;
the apparatus determines, based on at least one of the first preset rule or the first indication, not to perform CBR measurement for the sidelink discovery transmission; or
a resource pool selected by the apparatus is a normal communication resource pool or an exceptional resource pool.

20. The apparatus according to claim 18, wherein in a case that the apparatus determines, based on at least one of the first preset rule or the first indication, not to perform CBR measurement for the sidelink discovery transmission, the apparatus does not perform CBR measurement on a first target resource pool, wherein
the first target resource pool is any resource pool in a resource pool set; and
the resource pool set comprises at least one of a normal communication resource pool, an exceptional resource pool, or a discovery dedicated resource pool.

21. The apparatus according to claim 18, wherein the apparatus further comprises:
an execution module, configured to perform CBR measurement on a second target resource pool in a case of determining, based on at least one of the first preset rule or the first indication, to perform CBR measurement for the sidelink discovery transmission, wherein
the second target resource pool is part of resource pools in a resource pool set; and
the resource pool set comprises at least one of a normal communication resource pool, an exceptional resource pool, or a discovery dedicated resource pool.

22. The apparatus according to claim 17, wherein the determining module is further configured to:
determine, based on at least one of a second preset rule or a second indication, whether to perform full sensing resource selection for the sidelink discovery transmission, wherein
the second indication comprises at least one of the following:
a network configuration indication;
a preconfiguration indication; or
a terminal upper layer indication.

23. The apparatus according to claim 22, wherein in a case that the second indication comprises at least one of the network configuration indication or the preconfiguration indication, the determining module is further configured to perform any one of the following:
in a case that at least one of a network configuration or a preconfiguration carries a discovery dedicated resource pool configuration, and the discovery dedicated resource pool configuration does not carry a parameter configuration related to a power saving resource selection mechanism, determine to perform full sensing resource selection for the sidelink discovery transmission; or
in a case that at least one of a network configuration or a preconfiguration carries a discovery dedicated resource pool configuration, and the discovery dedicated resource pool configuration carries a parameter configuration related to a power saving resource selection mechanism, determine not to perform full sensing resource selection for the sidelink discovery transmission.

24. The apparatus according to claim 22, wherein the apparatus further comprises:
in a case of determining, based on at least one of the second preset rule or the second indication, to perform full sensing resource selection for the sidelink discovery transmission, select a third target resource pool for full sensing resource selection, wherein
the third target resource pool is at least part of resource pools in a resource pool set; and
the resource pool set comprises at least one of a normal communication resource pool, an exceptional resource pool, or a discovery dedicated resource pool.

25. The apparatus according to claim 24, wherein in a case that the resource pool set does not comprise the discovery dedicated resource pool, the third target resource pool comprises a resource pool that supports only full sensing resource selection and/or a resource pool that supports at least full sensing resource selection in the normal communication resource pool; or
in a case that the resource pool set comprises the discovery dedicated resource pool, the third target resource pool comprises the discovery dedicated resource pool.

26. A terminal, comprising a processor and a memory, wherein the memory stores a program or instructions executable on the processor, and the program or the instructions, when executed by the processor, implement the steps of the sidelink discovery transmission processing method according to any one of claims 1 to 16.

27. A readable storage medium, wherein the readable storage medium stores a program or instructions, and the program or the instructions, when executed by a processor, implement the steps of the sidelink discovery transmission processing method according to any one of claims 1 to 16.
